# FASCICULE DE BREVET EUROPEEN

(11) **EP 1 038 349 B1**
(45) Date de publication et mention de la délivrance du brevet: **11.02.2009**
(21) Numéro de dépôt: 99934620.8
(22) Date de dépôt: 07.07.1999
(51) Int. Cl.: H02P 6/18

(54) **DISPOSITIF DE COMMANDE D'UN MOTEUR ELECTRIQUE**
REGELUNGSVORRICHTUNG FÜR EINEN ELEKTRISCHEN MOTOR
DEVICE FOR CONTROLLING AN ELECTRIC MOTOR

(30) Priorité: 17.07.1998 FR 9809153
(43) Date de publication de la demande: 27.09.2000
(73) Titulaire: Bien-Air Holding SA, 2504 Bienne (CH)
(72) Inventeur: VOILLAT, Jean-Pierre, CH-2857 Montavon (CH)
(74) Mandataire: Laurent, Jean
(86) Numéro de dépôt international: PCT/EP1999/004781
(87) Numéro de publication internationale: WO 2000/004631

(56) Documents cités:
- EP-A- 0 688 539
- EP-A- 0 801 463
- WO-A-92/19038
- PATENT ABSTRACTS OF JAPAN vol. 097, no. 009, 30 septembre 1997 (1997-09-30) & JP 09 121585 A (MABUCHI MOTOR CO LTD), 6 mai 1997 (1997-05-06)
- IQBAL HUSAIN ET AL: "ROTOR POSITION SENSING IN SWITCHED RELUCTANCE MOTOR DRIVES BY MEASURING MUTUALLY INDUCED VOLTAGES" IEEE TRANSACTIONS ON INDUSTRY APPLICATIONS, vol. 30, no. 3, 1 mai 1994 (1994-05-01), pages 665-671, XP000459023

## Description

La présente invention concerne le domaine des moteurs électriques comprenant au moins trois enroulements statoriques et, plus particulièrement, un dispositif de commande d'un tel moteur comprenant des moyens de détermination pour détecter la position angulaire instantanée d'un rotor.

On définit dans la présente description par « moteur sans charbons » ou « moteur sans collecteur » un moteur électrique à courant continu qui comprend une partie mobile (ou "rotor") pourvue d'un aimant permanent, et une partie fixe (ou "stator") pourvue d'au moins trois enroulements bipolaires fixes. Dans le cas où le moteur comprend trois enroulements statoriques, ces derniers sont disposés pour être décalés de 120 ° entre eux. Un moteur de ce type présente l'avantage de pouvoir être stérilisé, par exemple dans un autoclave, contrairement aux moteurs avec charbons, dont les charbons se dégradent au cours de la stérilisation. Or, la question de la stérilisation devient une préoccupation première, en particulier dans des domaines d'application requérant une hygiène sanitaire optimale, tels que le domaine de l'instrumentation médicale.

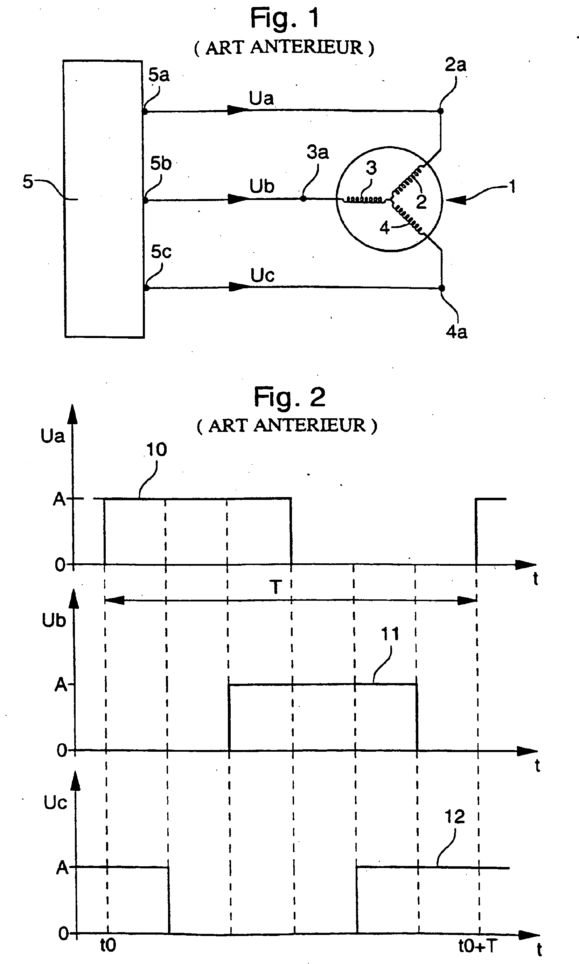

La figure 1 représente sous forme schématique un moteur sans charbons 1 pourvu de trois enroulements statoriques 2 à 4, ce moteur étant commandé par un générateur de tension classique 5. A cet effet, chacun des enroulements 2 à 4 comprend une borne de connexion. Les références 2a, 3a et 4a désignent respectivement les bornes de connexion des enroulements 2, 3 et 4. Le générateur 5 comprend trois bornes de connexion 5a, 5b et 5c connectées respectivement aux bornes 2a, 3a et 4a, et est agencé pour pouvoir fournir, par les bornes 5a à 5c, trois tensions électriques respectives Ua à Uc aux trois enroulements respectifs 2 à 4, ce qui réalise la commande du moteur 1.

La figure 2 représente trois chronogrammes 10 à 12 des tensions Ua à Uc lors de la commande du moteur de la figure 1. On note que l'ensemble de ces trois tensions constitue un système triphasé formé de signaux carrés périodiques, ces signaux ayant une même amplitude désignée A et une même période désignée T, et étant déphasés de T/3 entre eux. Dans la figure 2, la référence t0 désigne un instant initial quelconque.

Quand les tensions Ua à Uc de la figure 2 sont appliquées aux enroulements respectifs 2 à 4 de la figure 1, ces enroulements peuvent être polarisés séquentiellement selon six états différents. Le premier état correspond à l'intervalle de temps compris entre les instants t0 et t0+T/6, au cours duquel les tensions Ua, Ub et Uc valent respectivement A, 0 et A. Le deuxième état correspond à l'intervalle de temps compris entre les instants t0+T/6 et t0+2T/6, et ainsi de suite. Il résulte de cette polarisation la création d'un champ tournant propre à provoquer la rotation du rotor, l'aimant permanent de ce rotor étant agencé dans le proche voisinage des enroulements 2 à 4. A titre d'exemple, la vitesse de rotation du rotor peut varier entre 0 et 40.000 tr/min, et la fréquence F0 correspondant à la période T peut être comprise entre 1 et 667 Hz.

Un problème rencontré avec une commande de ce type est qu'il est nécessaire de déterminer la position angulaire instantanée du rotor. En effet, pour provoquer une rotation du rotor vers une position angulaire souhaitée, on doit déterminer la position angulaire de ce rotor à l'instant où l'on applique des tensions de commande aux enroulements statoriques, de sorte que les valeurs des tensions appliquées peuvent créer, dans l'entrefer, un champ magnétique propre à provoquer la rotation du rotor depuis la position angulaire ainsi déterminée vers la position angulaire souhaitée.

Une première solution classique au problème de détermination de la position angulaire du rotor consiste à équiper un tel moteur d'un dispositif de codage qui est lié au rotor, et qui commande la commutation des tensions électriques appliquées sur les enroulements statoriques. Par exemple, on utilise communément des capteurs électroniques sans contact pour détecter la position angulaire du rotor, ledit dispositif de codage comprenant un aimant qui tourne avec le rotor, et plusieurs cellules ou capteurs à effet Hall situés dans le champ de cet aimant, et fixés au stator de manière à commuter lors des inversions de champs magnétiques. On rappelle qu'une cellule à effet Hall est agencée pour pouvoir détecter les variations d'un champ magnétique avoisinant.

Une telle solution présente divers inconvénients. Notamment, les cellules à effet Hall sont relativement onéreuses, et leur montage au voisinage du moteur augmente l'encombrement de ce dernier. En outre, il est nécessaire d'utiliser, en plus des trois fils d'alimentation du moteur, deux fils pour alimenter les cellules à effet Hall et trois fils pour collecter les informations fournies par celles-ci. Il va de soi que l'agencement d'un instrument à huit fils va à l'encontre des contraintes de maniabilité, de stérilisation, de poids, de robustesse et de coût, ces contraintes étant courantes en industrie, notamment dans le domaine de l'instrumentation médicale.

Une deuxième solution classique au problème de détermination de la position angulaire du rotor consiste à mesurer la force contre-électromotrice qui est proportionnelle à la vitesse de rotation du rotor et qui, de ce fait, peut fournir une information relative à son déplacement, donc à la vitesse du rotor. Une telle solution est par exemple connue du document EP 0801463.

Un inconvénient d'une telle solution réside dans le fait qu'elle ne permet pas de déterminer directement la position angulaire du rotor.

Un autre inconvénient de cette solution réside dans le fait que cette force diminue avec la vitesse de rotation du rotor, ce qui la rend difficile à mesurer.

Un autre inconvénient de cette solution réside dans le fait que la détermination de la position instantanée du rotor perturbe le fonctionnement normal du moteur. En effet, la mesure de la force contre-électromotrice ne peut être faite simultanément avec la fourniture des tensions de commande du moteur. Ainsi, le fonctionnement du moteur est interrompu à chacune des mesures de force contre-électromotrice.

On a donc observé que toutes les solutions proposées dans l'état de la technique pour répondre au problème susmentionné n'étaient pas satisfaisantes pour, d'une part, détecter la position angulaire instantanée du rotor et, d'autre part, répondre à des contraintes ou à des préoccupations propres à des domaines d'application spécifiques, par exemple pour la commande d'un moteur sans charbons dans un instrument dentaire. A titre d'exemple également, dans le cadre d'une application à la robotique, les solutions classiques ne permettent pas de commander la rotation du rotor d'un angle prédéterminé avec une précision suffisante et avec un nombre de fils réduit.

Un objet de la présente invention est de prévoir un dispositif de commande pouvant être connecté à un moteur sans charbons, ce dispositif palliant les inconvénients susmentionnés et, en particulier, pouvant détecter la position angulaire instantanée du rotor du moteur.

Un autre objet de la présente invention est de prévoir un dispositif de commande pouvant être connecté avec un minimum de fils de connexion, de manière à répondre aux contraintes de maniabilité, de poids et de coût, ces contraintes étant courantes en industrie, et notamment dans le domaine de l'instrumentation médicale.

Un autre objet de la présente invention est de prévoir un dispositif de commande pouvant déterminer la position angulaire instantanée du rotor indépendamment de la vitesse de rotation du rotor, même si le rotor est à l'arrêt.

Un autre objet de la présente invention est de prévoir un dispositif de commande pouvant déterminer la position angulaire instantanée du rotor sans perturber le fonctionnement normal du moteur.

Un autre objet de la présente invention est de prévoir un dispositif de commande répondant aux contraintes de stérilisation et de robustesse, en particulier pour une application dans le domaine de l'instrumentation médicale.

Ces objets, ainsi que d'autres, sont atteints par le dispositif de commande selon la revendication 1.

Le dispositif selon la présente invention comprend un moyen de détermination qui a pour avantage de fournir au moins deux signaux de mesure à des fréquences respectives qui représentent ensemble la position angulaire du rotor, et que la fourniture de ces signaux est indépendante du fonctionnement normal du moteur, notamment de la commande de ce dernier par le moyen d'alimentation.

Un autre avantage de ce moyen de détermination réside dans le fait qu'il est connecté sur les fils d'alimentation reliant le moteur au moyen d'alimentation, sans nécessiter de connexions supplémentaires entre le moteur et le moyen de détermination pour pouvoir déterminer la position angulaire du rotor. Il en résulte que le moteur équipé d'un tel dispositif d'acquisition répond aux préoccupations de maniabilité, de robustesse et de poids, qui sont courantes en industrie, notamment dans le domaine de l'instrumentation dentaire.

Le dispositif selon la présente invention comprend en outre des moyens de filtrage qui ont pour avantage de filtrer les signaux de mesure aux bornes de sortie du moyen d'alimentation, de manière à assurer que les fourniture de ces signaux ne perturbent pas la commande du moteur par la moyen d'alimentation.

Le dispositif selon la présente invention comprend en outre un moyen de mesure qui a pour avantage de fournir les signaux de mesure dont les fréquences sont supérieures à la fréquence des signaux de commande, et dont les amplitudes sont inférieures auxdits signaux de commande, de sorte que les signaux de mesure n'interfèrent pas avec les signaux de commande lors de la commande du moteur, de manière à assurer que la fourniture des signaux de commande ne perturbent pas la commande du moteur par le moyen d'alimentation.

Un autre avantage du moyen de détermination réside dans le fait qu'il comprend des composants électroniques peu coûteux; peu complexes et peu volumineux, ce qui répond aux préoccupations habituelles en industrie, de prix, de rationalisation et d'encombrement.

Un autre avantage du dispositif de commande selon la présente invention réside dans le fait qu'il permet de déterminer, notamment quand le rotor est à l'arrêt, la position angulaire instantanée du rotor, sans induire aucun effet sur la répartition inductive du champ tournant présent dans l'entrefer du moteur. En effet, l'homme de l'art notera que les signaux de mesure à leurs fréquences respectives peuvent être fournis pour une valeur quelconque de la vitesse de rotation du rotor, et en particulier quand le rotor est à l'arrêt, puisque la détermination de la position angulaire découle de la mesure des fréquences de mesure qui sont fournies indépendamment de la commande du moteur par le moyen d'alimentation.

Un autre avantage du dispositif de commande selon la présente invention réside dans le fait qu'il permet de déterminer la position angulaire instantanée du rotor, avec une précision de l'ordre du degré, ce qui répond à une exigence de précision, qui est courante en industrie, notamment dans les domaines de la robotique et de l'implantologie dentaire.

Le dispositif selon la présente invention comprend en outre un moyen de traitement qui a pour avantage de comparer la position angulaire calculée à une valeur de comparaison, ce qui permet de contrôler l'évolution de la position angulaire du rotor au cours du temps.

Un autre avantage de ce moyen de traitement réside dans le fait qu'il permet de calculer le nombre de tours effectués par le rotor, ainsi que la vitesse et l'accélération du rotor, ce qui permet de contrôler l'évolution de ces paramètres au cours du temps.

Ces objets, caractéristiques et avantages, ainsi que d'autres, de la présente invention apparaîtront plus clairement à la lecture de la description détaillée de deux modes de réalisation préférés de la présente invention, donnés à titres d'exemples uniquement, en relation avec les figures jointes, parmi lesquelles :
- la figure 1 déjà citée représente sous forme schématique un moteur sans charbons classique commandé par un générateur de tension classique;
- la figure 2 déjà citée représente trois chronogrammes de tensions de commande du moteur de la figure 1;
- la figure 3 représente sous forme de blocs un dispositif de commande selon la présente invention connecté au moteur de la figure 1;
- la figure 4 représente un premier mode de réalisation du dispositif de la figure 3;
- les figures 5 et 6 représentent deux configurations électriques du dispositif de la figure 4;
- la figure 7 représente deux courbes illustrant les évolutions temporelles d'un signal de mesure associé à la configuration de la figure 5, quand le rotor est dans deux positions angulaires respectives;
- la figure 8 représente deux courbes illustrant les relations entre la position angulaire du rotor et deux fréquences mesurées associées aux configurations des figures 5 et 6;
- la figure 9 représente de façon plus détaillée un moyen de calcul associé au dispositif de la figure 4;
- la figure 10 représente un chronogramme d'un signal fourni par le moyen de calcul de la figure 9, pour commander les configurations des figures 5 et 6; et
- la figure 11 représente un deuxième mode de réalisation du dispositif de la figure 3.

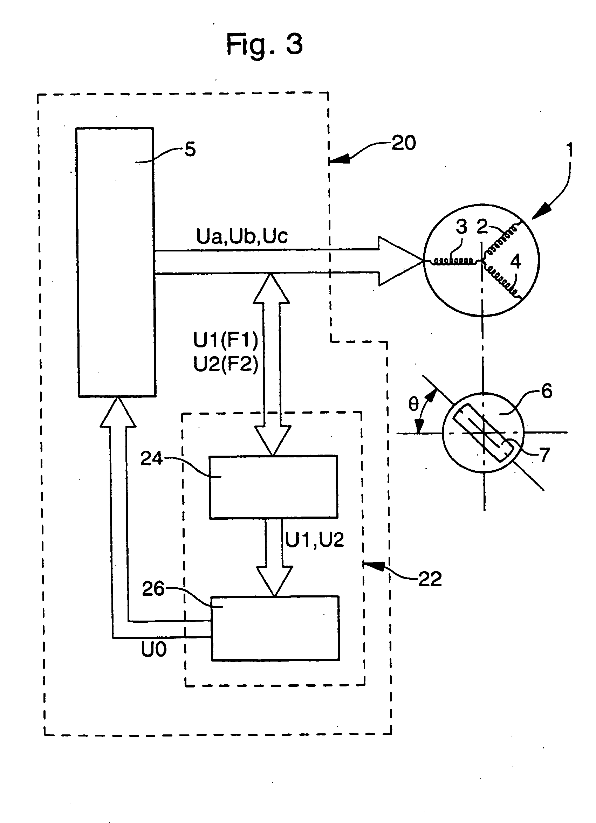

La figure 3 représente sous forme de blocs un dispositif de commande selon la présente invention désigné par la référence 20. Ce dispositif est agencé et connecté à un moteur semblable au moteur 1 de la figure 1, de manière à commander ce dernier. On note en figure 3 que des éléments du dispositif de commande 20 identiques à ceux décrits en relation avec la figure 1, ont été désignés par les mêmes références.

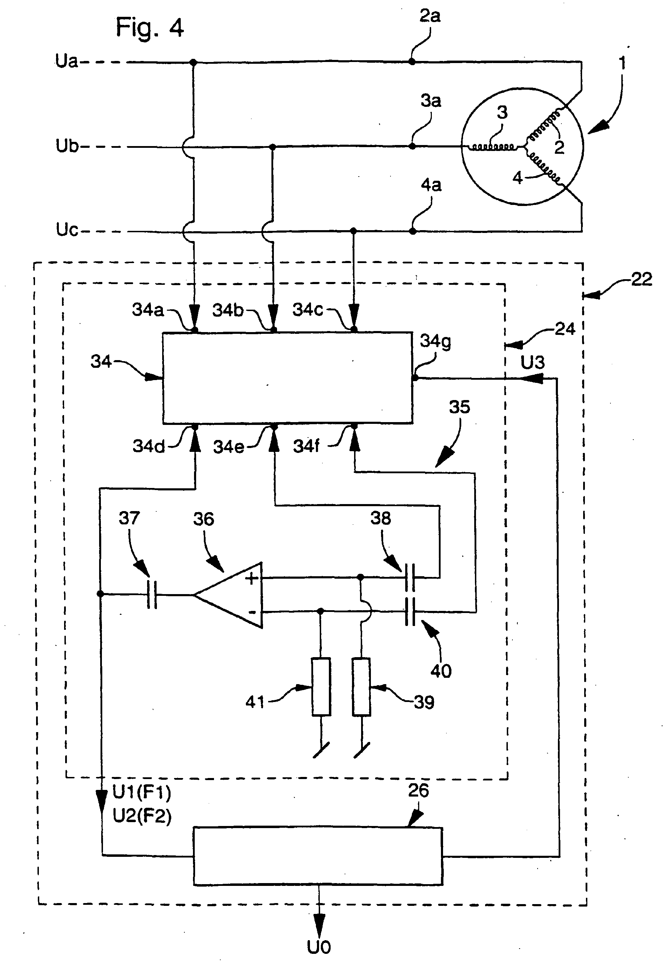

Le moteur 1 comprend un rotor 6 muni d'un aimant permanent 7 couplé magnétiquement à trois enroulements statoriques 2 à 4. L'homme de l'art notera que le dispositif selon la présente invention peut également être agencé pour commander un moteur pourvu d'un nombre d'enroulements statoriques supérieur à trois. On note en figure 3 (ainsi que dans les figures 4,5,6 et 11) que le moteur 1 est représenté sous la forme d'un montage dit « étoile ». Toutefois, il va de soi que le dispositif selon la présente invention peut également commander un moteur comprenant trois enroulements statoriques connectés sous la forme d'un montage dit « triangle ».

Le moteur 1 est connecté à un moyen d'alimentation formant un moyen de fourniture semblable au générateur 5 de la figure 1. On rappelle que le générateur de tension 5 est agencé pour connecter successivement les enroulements 2 à 4 à une source d'alimentation non représentée, de manière à fournir des tensions Ua, Ub et Uc aux enroulements 2 à 4, à l'instar des chronogrammes de la figure 2. Les connexions du générateur de tension 5 sont réalisées en réponse à un signal U0 qui est compatible avec le fonctionnement correct du générateur de tension 5, la fourniture de ce signal étant décrite ci-après.

Le dispositif de commande 20 comprend un moyen 22 pour déterminer la position angulaire θ du rotor. Le moyen de détermination 22 comprend un moyen 24 pour mesurer deux fréquences différentes F1 et F2 distinctes, le moyen de mesure 24 fournissant deux signaux U1 et U2 aux deux fréquences respectives F1 et F2. Le moyen de détermination 22 comprend en outre un moyen 26 pour calculer la position angulaire θ à partir des deux signaux U1 et U2, et pour fournir cette position sous la forme du signal U0.

La figure 4 représente un premier mode de réalisation du dispositif 20, en particulier du moyen de mesure 24.

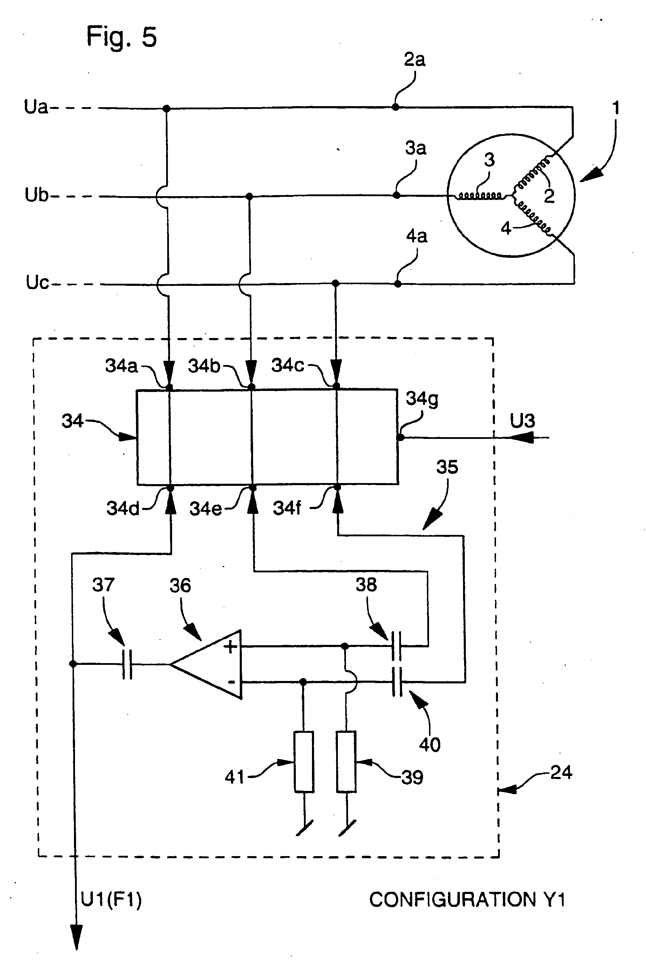

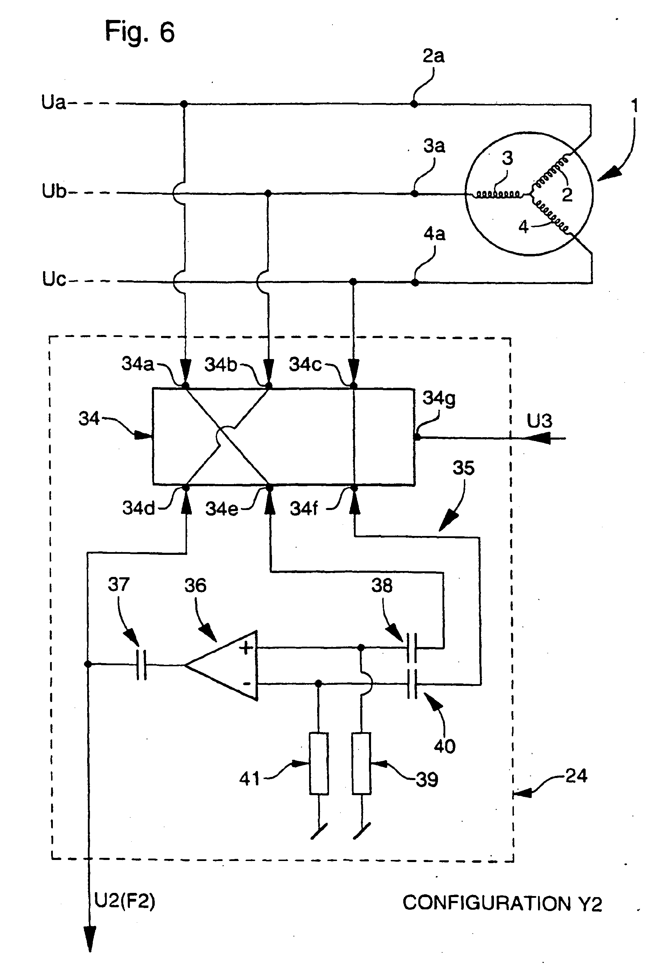

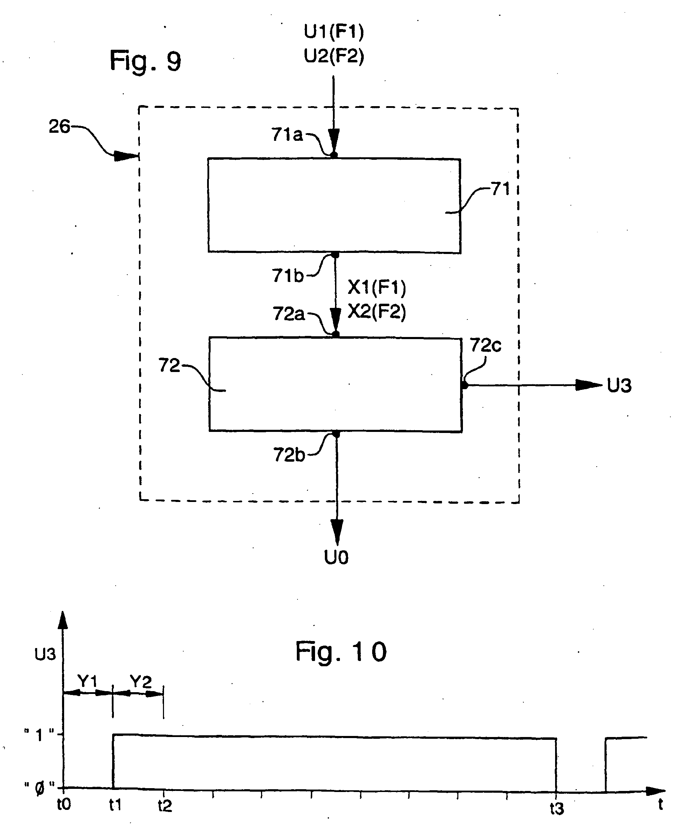

Le moyen de mesure 24 comprend un circuit de commutation 34 comportant un premier groupe de bornes 34a à 34c, un deuxième groupe de bornes 34d à 34f, et une borne de commande 34g. Le moyen de commutation 34 est agencé pour pouvoir recevoir un signal de commande U3 par la borne 34g, et pour connecter en réponse les bornes 34a à 34c d'une part, aux bornes 34d à 34f d'autre part, selon deux configurations électriques Y1 et Y2 décrites ci-après en relation avec les figures 5 et 6. On notera que la fourniture du signal U3 est décrite de façon plus détaillée ci-après en relation avec la figure 10. De préférence, on réalise le circuit de commutation 34 en utilisant des commutateurs formés par des composants électroniques connus en soi, qui effectuent les connexions des configurations Y1 et Y2.

Le moyen de mesure 24 comprend en outre un circuit d'amplification 35 destiné à fournir les signaux périodiques U1 et U2 respectivement aux fréquences F1 et F2, quand le moyen de commutation 34 est dans les configurations respectives Y1 et Y2. Dans l'exemple de la figure 4, le circuit d'amplification 35 comprend un amplificateur opérationnel 36 dont la sortie est connectée, par l'intermédiaire d'un condensateur 37, à la borne 34d. L'entrée non-inverseuse (ou borne "+") de l'amplificateur opérationnel 36 est connectée, d'une part à la borne 34e par l'intermédiaire d'un condensateur 38, et d'autre part à la masse du dispositif par l'intermédiaire d'une résistance 39. L'entrée inverseuse (ou borne "-") de l'amplificateur opérationnel 36 est connectée, d'une part à la borne 34f par l'intermédiaire d'un condensateur 40, et d'autre part à la masse du dispositif par l'intermédiaire d'une résistance 41.

On va maintenant décrire les deux configurations Y1 et Y2 du circuit de commutation 34. Les figures 5 et 6 représentent les schémas électriques du moyen de mesure 24 de la figure 4, selon les configurations respectives Y1 et Y2. Dans la suite de la description, les références Y1 et Y2 désigneront également les schémas électriques du moyen de mesure 24 connecté au moteur 1 par t'intermédiaire du circuit de commutation 34, selon les deux configurations respectives Y1 et Y2 de ce dernier. On notera en figures 5 et 6 que les éléments du dispositif de commande 20 identiques à ceux décrits en relation avec la figure 4 ont été désignés par les mêmes références.

Dans la configuration Y1, comme le représente la figure 5, le circuit de commutation 34 est agencé de sorte que les bornes 34a à 34c sont connectées respectivement aux bornes 34d à 34f. Autrement dit, dans la configuration Y1, la sortie de l'amplificateur opérationnel 36 est connectée à la borne 2a du moteur 1, par l'intermédiaire du condensateur 37, et les entrées non-inverseuse et inverseuse de cet amplificateur sont connectées respectivement aux bornes 3a et 4a. Ainsi, dans la configuration Y1, le moyen de mesure 24 (c'est-à-dire le circuit de commutation 34 et le circuit d'amplification 35) et les enroulements 2 à 4 forment un premier circuit oscillant dans lequel la sortie de l'amplificateur opérationnel 36 fournit, par l'intermédiaire du condensateur 37, le signal U1 à l'enroulement 2 et au moyen de calcul 26.

L'homme du métier notera que le signal U1 est périodique à la fréquence F1 qui dépend notamment de l'impédance vue depuis les bornes "+" et "-" de l'amplificateur opérationnel 36. Or cette impédance dépend directement de l'inductance des enroulements 2 à 4. On sait par ailleurs que l'inductance d'une bobine ou d'un enroulement dépend non seulement de sa structure, mais également de l'intensité du champ magnétique qui la traverse. Ainsi, dans le cas du moteur 1, les enroulements 2 à 4 sont couplés magnétiquement à l'aimant permanent du rotor, et chacun des enroulements. 2 à 4 est traversé par une partie du champ magnétique produit par cet aimant, qui dépend de la position angulaire θ de cet aimant par rapport à l'enroulement concerné. Autrement dit, la fréquence F1 dépend de la position angulaire θ du rotor.

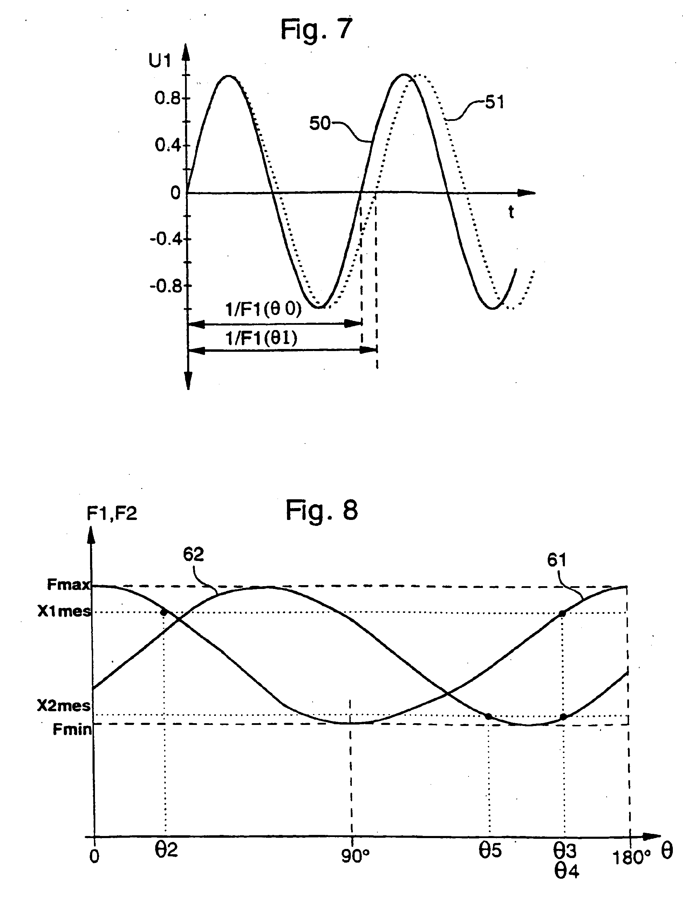

A titre illustratif uniquement, la figure 7 représente deux courbes 50 et 51 illustrant les évolutions temporelles du signal U1, quand le rotor est respectivement dans une première position angulaire θ0 ou position de référence et dans une deuxième position angulaire θ1 différente de la position de référence. Les courbes 50 et 51 de la figure 7 ont été mesurées expérimentalement, dans le but de démontrer la sensibilité de la fréquence F1 en fonction de la position angulaire θ. Ainsi, on a mesuré que la fréquence F1 (θ0) est égale à 1.43 Mhz, et que la fréquence F1(θ1) est égale à 1.3 Mhz, soit une différence de fréquence égale à 130 kHz entre les positions angulaires θ0 et θ1.

L'homme de l'art note également que la fréquence F1 varie périodiquement avec la position angulaire θ, à une période qui correspond à une rotation de 360 ° du rotor divisée par le nombre de pôles de l'aimant de ce rotor. Dans le cas présent, ce nombre étant égal à 2, la période de variation de la fréquence F1 correspond donc à une rotation de 180 ° du rotor.

A titre illustratif uniquement, la figure 8 représente une courbe 61 illustrant les variations de la fréquence F1 en fonction de la position angulaire θ. Les références Fmin et Fmax désignent respectivement les valeurs minimale et maximale de la fréquence F1.

Dans la configuration Y2, comme le représente la figure 6, le circuit de commutation 34 est agencé de sorte que les bornes 34a à 34c sont connectées respectivement aux bornes 34e, 34d et 34f, ce qui réalise ladite configuration Y2. Autrement dit, dans la configuration Y2, la sortie de l'amplificateur opérationnel 36 est connectée à la borne 3a du moteur 1, par l'intermédiaire du condensateur 37, et les entrées non-inverseuse et inverseuse de cet amplificateur sont connectées respectivement aux bornes 2a et 4a. Ainsi, dans la configuration Y2, le moyen de mesure 24 (c'est-à-dire le circuit de commutation 34 et le circuit d'amplification 35) et les enroulements 2 à 4 forment un deuxième circuit oscillant dans lequel la sortie de l'amplificateur opérationnel 36 fournit, par l'intermédiaire du condensateur 37, le signal U2 à l'enroulement 3 et au moyen de calcul 26.

La figure 8 représente également une courbe 62 illustrant les variations de la fréquence F2 en fonction de la position angulaire θ. Comme le représente cette figure, à l'instar de la fréquence F1, la fréquence F2 varie périodiquement entre une valeur minimale et une valeur maximale, avec une période qui correspond à une rotation de 180 ° du rotor. Il va de soi que les valeurs minimale et maximale de la fréquence F2 sont égales respectivement à celles de la fréquence F1, dans la mesure où les enroulements 2 à 4 sont symétriques, et ont le même nombre de tours et la même inductance. En outre, on note en figure 8 que la courbe 61 associée à la fréquence F1 est décalée de 120 ° par rapport à la courbe 62 associée à la fréquence F2. L'homme du métier comprend aisément qu'un tel décalage provient de l'agencement des enroulements 2 à 4 dans le moteur 1, et de l'aimant bipolaire, dans cet exemple, du rotor.

L'homme du métier note que la fourniture des signaux U1 et U2 aux fréquences respectives F1 et F2 ne doit pas perturber le fonctionnement normal du moteur 1, c'est-à-dire la commande du moteur 1 par le générateur de tension 5.

A cet effet, le circuit d'amplification 35 est agencé de sorte que les amplitudes des signaux U1 et U2 sont sensiblement inférieures à celles des tensions Ua à Uc, et que les valeurs minimales des fréquences F1 et F2 sont sensiblement supérieures à la valeur maximale de la fréquence F0 des tensions Ua à Uc. En outre, le circuit d'amplification 35 est agencé de sorte que la valeur maximale des fréquences F1 et F2 est sensiblement inférieure à la valeur de la fréquence du signal utilisé lors des tests de compatibilité électromagnétique qui sont communément pratiqués notamment dans le domaine de l'instrumentation dentaire, la fréquence minimale utilisée lors des tests de compatibilité électromagnétique étant de l'ordre de 30 Mhz.

A titre d'exemple, dans le cas où l'amplitude des tensions Ua à Uc varie de 0 à 24 V, et que la fréquence F0 de ces tensions est comprise entre 1 et 667 Hz, l'amplitude des signaux U1 et U2 est d'environ 2 V, et les fréquences F1 et F2 sont de l'ordre de quelques MHz.

De même, afin d'éviter de perturber la fourniture des tensions de commande Ua à Uc, c'est-à-dire d'assurer le fonctionnement normal du moteur 1, trois filtres (non représentés) peuvent être connectés respectivement aux bornes de sortie 5a à 5c du générateur de tension 5, pour filtrer les signaux liés à la mesure (notamment les signaux U1 et U2), dont la fréquence est de l'ordre de quelques MHz, tout en ne modifiant pas les tensions Ua à Uc. De préférence, on réalise lesdits filtres en utilisant trois filtres coupe-bande comprenant chacun une bobine et un condensateur connecté en parallèle avec la bobine, ces filtres bloquant les signaux U1 et U2 dont les fréquences respectives F1 et F2 appartiennent à la plage des fréquences bloquées par lesdits filtres coupe-bande. A titre de variante, on peut réaliser lesdits filtres en utilisant trois filtres passe-bas comprenant trois bobines respectives connectées en série entre les bornes de sortie 5a, 5b et 5c, respectivement, et les bornes de connexion 2a, 3a et 4a, respectivement, et trois condensateurs respectifs connectés en parallèle entre les bornes de sortie respectives 5a,5b et 5c et la masse du dispositif.

Concernant le moyen de calcul 26, on rappelle que ce moyen est agencé pour calculer la position angulaire à partir des deux signaux U1 et U2.

La figure 9 représente un mode de réalisation du moyen de calcul 26 du dispositif de commande 20 de la figure 4. On notera en figure 9 que les éléments du dispositif de commande 20 identiques à ceux décrits en relation avec les figures précédentes, ont été désignés par les mêmes références.

Comme le représente la figure 9, le moyen de calcul 26 comprend un convertisseur fréquence-tension 71 et un circuit de traitement 72.

Le convertisseur fréquence-tension 71 comprend une borne d'entrée 71a connectée à la sortie de l'amplificateur opérationnel 36 de la figure 4, et une borne de sortie 71 b connectée au circuit de traitement 72. Le convertisseur 71 est agencé pour recevoir le signal U1 (respectivement U2) par une borne 71 a, et pour convertir ce signal en une tension X1 (respectivement X2) compatible avec le fonctionnement du circuit de traitement 72, l'amplitude de cette tension étant proportionnelle à l'écart entre la fréquence F1 (respectivement F2) et une valeur connue de cette fréquence (par exemple, la valeur Fmax ou Fmin de la figure 8). Le convertisseur 71 est également agencé pour fournir la tension X1 (respectivement X2) par une borne 71 b. De préférence, le convertisseur fréquence-tension 71 est réalisé par un discriminateur de fréquence connu en soi.

Le circuit de traitement 72 comprend une borne d'entrée 72a connectée à la borne de sortie 71 b du convertisseur 71, et une borne de sortie 72b connectée, dans l'exemple de la figure 3, au générateur de tension 5. En outre, le circuit de traitement 72 est agencé pour recevoir les tensions X1 et X2 par la borne 72a, et pour effectuer des opérations permettant de déterminer la valeur unique de la position angulaire θ correspondant au couple {F1, F2} des fréquences F1 et F2 représentées par les tensions X1 et X2.

Pour mieux comprendre les opérations effectuées par le circuit de traitement 72, on se référera à nouveau à la figure 8. Ainsi, une tension instantanée mesurée X1 mes correspond, par définition, à une valeur de la fréquence F1 comprise entre Fmax et Fmin, et représentée en figure 8 par la référence X1 mes. Comme le représente cette figure, la tension X1 mes correspond sur la courbe 61 à deux valeurs angulaires θ2 et θ3 comprises entre 0 et 180 °. De même, une tension instantanée mesurée X2mes correspond sur la courbe 62 à deux valeurs angulaires θ4 et θ5. On note que deux valeurs parmi les valeurs θ2 à θ5 (dans le cas présent θ3 et θ4) sont congrues modulo .180 °, ce qui définit l'existence d'une unique valeur comprise entre 0 et 180 °. Autrement dit, il correspond au couple {X1mes, X2mes} une unique valeur qui est égale à la valeur θ3 associée à la courbe 61, ou à la valeur θ4 associée à la courbe 62, cette unique valeur étant la position angulaire θ recherchée.

En pratique, étant donné que les courbes 61 et 62 de la figure 8 sont identiques entre elles, à un décalage près de 120°, le circuit de traitement 72 est programmé pour contenir une seule table de correspondance entre la tension X1 ou X2 et la valeur angulaire θ, cette table étant semblable à une table trigonométrique classique entre des valeurs Arcsin(θ) et les valeurs angulaires θ correspondantes. Le circuit de traitement 72 est programmé pour effectuer les opérations successives suivantes. Une première opération consiste à déterminer, à partir de ladite table, un premier couple de valeurs angulaires θ6 et θ7 correspondant à la tension X1 reçue par la borne 72a, ainsi qu'un deuxième couple de valeurs angulaires θ8 et θ9 correspondant à la tension X2. Et une deuxième opération consiste à déterminer, parmi les valeurs θ6 à θ9, les deux valeurs dont la différence est égale à 120 ° et, parmi ces deux valeurs, celle qui correspond à la courbe 61, cette valeur étant considérée comme la position angulaire θ recherchée.

On note que la valeur de 120 ° introduite dans ladite deuxième opération correspond au décalage de 120 ° des courbes 61 et 62 de la figure 8, ce décalage ayant déjà été mentionné ci-dessus. Ainsi, dans le cas où les valeurs angulaires correspondant aux tensions X1mes et X2mes sont déterminés à partir de ladite table (et non des courbes 61 et 62 de la figure 8), il faut introduire mathématiquement l'existence de ce décalage par le calcul des différences entre des valeurs θ6 à θ9, deux d'entre elles étant distantes de 120 °.

On note également que l'utilisation de la table de correspondance peut nécessiter une opération initiale supplémentaire qui consiste à normaliser les tensions X1 mes et X2mes, à partir des valeurs de crête des tensions X1 et X2 qui dépendent des composants du dispositif.

Il va de soi que les résultats des opérations effectués par le circuit de traitement 72 ne fournissent pas des valeurs exactes mais approchées. A titre de perfectionnement, on peut prévoir une troisième mesure de fréquence F3, par exemple lors d'une troisième configuration Y3, ce qui permet d'augmenter la précision de la position angulaire θ obtenue lors de ces calculs.

De préférence, on réalise le circuit de traitement 72 en utilisant un microprocesseur à 32 bits classique. Ce microprocesseur est programmé pour effectuer notamment les opérations susmentionnées.

Comme le représente la figure 4 en combinaison avec la figure 9, le circuit de traitement 72 peut également être programmé pour fournir, par la borne 72c, le signal de commande U3 au moyen de commutation 34, de manière à définir un cycle de mesure divisé en trois phases, de sorte que, au cours des première et deuxième phases, le moyen de mesure 24 a respectivement les configurations Y1 et Y2 pour fournir au moyen de calcul 26 les signaux respectifs U1 et U2 et, au cours de la troisième phase, le moyen de calcul 26 détermine la position angulaire recherchée.

A titre d'exemple uniquement, la figure 10 représente un chronogramme 91 du signal U3. La référence t0 désigne un instant initial à partir duquel débute la première phase d'un cycle de mesure, la référence t1 désigne l'instant où s'achève cette première phase et débute la deuxième phase du même cycle, la référence t2 désigne l'instant où s'achève cette deuxième phase et débute la troisième phase du même cycle, et la référence t3 désigne l'instant où s'achève cette troisième phase et débute un nouveau cycle de mesure. Le signal U3 vaut "0" pendant la première phase, et "1" pendant les phases suivantes. A titre illustratif, on note que l'intervalle de temps entre les instants t0 et t1, ainsi que celui entre les instants t1 et t2, est compris entre 50 et 100 µs, et que l'intervalle de temps entre les instants t2 et t3 est compris entre 400 et 600 µs.

Il va de soi pour l'homme du métier que la description détaillée ci-dessus peut subir diverses modifications, variantes de réalisation et perfectionnement sans sortir du cadre de la présente invention.

A titre de variante, le dispositif selon la présente invention peut être agencé pour commander un moteur comprenant un nombre d'enroulements statoriques supérieur à trois. Dans ce cas, les connexions entre le moteur et le moyen d'alimentation, ainsi que celles entre le moteur et le moyen de mesure, sont agencées pour être adaptées au nombre d'enroulements statoriques du moteur.

A titre de variante également, le moyen de mesure de ce dispositif peut comprendre un circuit de commutation qui n'est pas commandé par le circuit de traitement, mais qui est connecté à un moyen de commande indépendant.

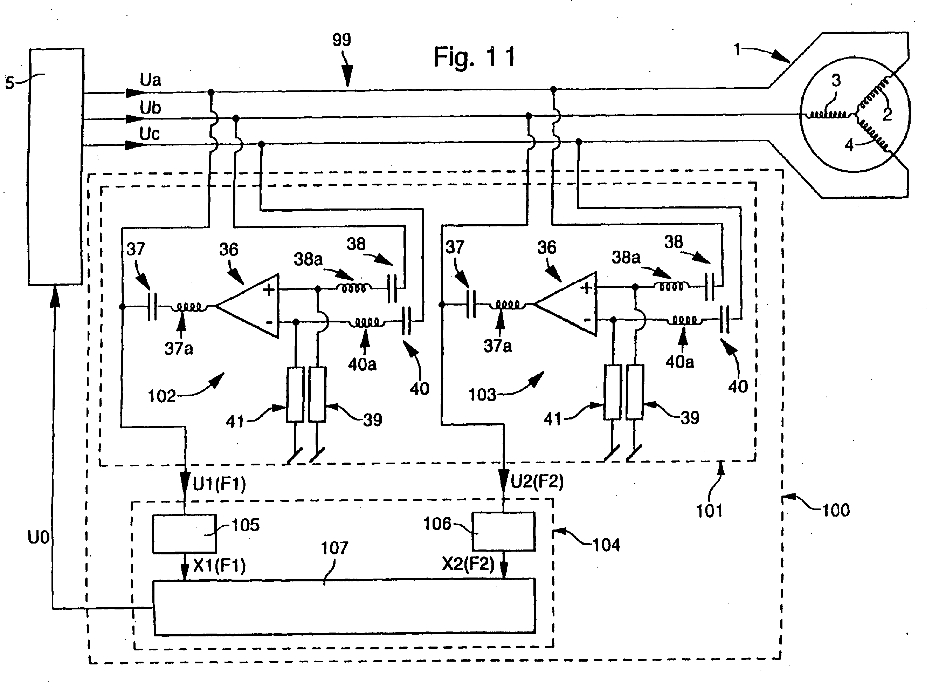

A titre de variante également, le moyen de mesure peut être agencé pour mesurer les fréquences F1 et F2 de façon simultanée, contrairement au moyen de mesure de la figure 4 dans lequel ces fréquences sont mesurées de façon séquentielle au cours d'un cycle de mesure tel que décrit ci-dessus. La figure 11 représente un deuxième mode de réalisation du dispositif de commande selon la présente invention, désigné par la référence 99, qui comprend un moyen de détermination 100 pourvu d'un moyen de mesure 101 tel que mentionné ci-dessus, et d'un moyen de calcul 104. On notera dans la figure 11 que des éléments du dispositif de commande 99 identiques à ceux décrits en relation avec les figures précédentes, ont été désignés par les mêmes références. Le moyen de mesure 101 comporte deux circuits d'amplification 102 et 103 identiques au circuit d'amplification 35 de la figure 4. Le moyen de mesure 104 comporte deux convertisseurs fréquence-tension 105 et 106 identiques au convertisseur fréquence-tension 71 de la figure 9, et un circuit de traitement 107 semblable au circuit de traitement 72 de la figure 9 également. Pour l'essentiel, on note que le circuit d'amplification 102 est connecté pour réaliser la configuration Y1 de la figure 5, et que le circuit d'amplification 103 est connecté pour réaliser la configuration Y2 de la figure 6, de sorte que les signaux U1 et U2 sont fournis simultanément au moyen de calcul 104.

L'homme du métier note que, dans le cas où les fréquences F1 et F2 sont fournies simultanément au moyen de calcul, chaque amplificateur opérationnel 36 des deux circuits d'amplification 102 et 103 ne peut pas être connecté au moteur 1 par l'intermédiaire des condensateurs 37, 38 et 40, à l'instar du dispositif de la figure 4. En effet, si tel était le cas, les signaux de mesure U1 et U2 seraient présents simultanément aux bornes des amplificateurs opérationnels 36 des deux circuits 102 et 103, ce qui ne permettrait pas de différencier les deux fréquences F1 et F2. A cet effet, trois bobines 37a, 38a et 40a sont connectées respectivement en série avec les condensateurs 37, 38 et 40, de manière à former respectivement trois filtres passe-bande accordés sur une fréquence prédéterminée, de sorte que les filtres du circuit d'amplification 102 sont accordés sur la fréquence F1 du signal U1 fourni par le circuit 102, et que les filtres du filtre d'amplification 103 sont accordés sur la fréquence F2 du signal U2 fourni par le circuit 103.

A titre de perfectionnement, le circuit de traitement peut commander, au cours d'un même cycle de mesure, au moins une configuration supplémentaire du circuit de commutation, afin de fournir une troisième fréquence pour augmenter la précision lors de la détermination de la position angulaire du rotor, par ledit circuit de traitement.

A titre de perfectionnement également, le circuit de traitement peut également être programmé pour pouvoir calculer, à partir des valeurs de position angulaire successivement déterminées, le nombre de tours effectués par le rotor, ainsi que la vitesse et l'accélération de ce rotor, et contrôler les évolutions de ces différents paramètres au cours du temps.

Considérons le calcul du nombre de tours effectués par le rotor. Le circuit de traitement 72, 107 peut être programmé pour stocker la position angulaire (ou première valeur) déterminée au terme d'un premier cycle de mesure, et la position angulaire (ou deuxième valeur) déterminée au terme du cycle de mesure suivant (ou deuxième cycle), et pour calculer la différence entre la deuxième valeur et la première valeur, cette différence fournissant la valeur du déplacement effectué par le rotor au cours du deuxième cycle, c'est-à-dire le nombre de tours recherché.

Considérons maintenant le calcul de la vitesse de rotation du rotor. Le circuit de traitement peut être programmé pour calculer la différence entre deux positions angulaires mesurées au terme de premier et deuxième cycles de mesure consécutifs, comme cela est décrit ci-dessus, et calculer le rapport de cette différence sur la période d'un cycle de mesure, ce rapport fournissant la valeur de la vitesse du rotor au cours dudit deuxième cycle.

De même, pour calculer l'accélération du rotor, le circuit de traitement peut être programmé pour calculer la différence entre deux vitesses du rotor mesurées au terme de premier et deuxième cycles de mesure consécutifs, comme cela est décrit ci-dessus, et calculer le rapport de cette différence sur la période d'un cycle de mesure, ce rapport fournissant la valeur de l'accélération du rotor au cours dudit deuxième cycle.

Considérons le contrôle des différents paramètres. Le circuit de traitement peut être programmé pour comparer la position angulaire θ, le nombre de tours effectués, la vitesse ou l'accélération du rotor à une valeur de comparaison prédéterminée.

A titre d'exemple, la position angulaire θ peut être comparée à une valeur théorique θs représentant la situation idéale de synchronisme. On rappelle à ce titre qu'une transmission est dite "synchrone" entre le stator et le rotor d'un moteur électrique, quand la vitesse de rotation du rotor est égale à celle du champ tournant. On rappelle également que, au cours d'une telle transmission, une augmentation du couple résistant appliqué au rotor, provoque une augmentation du décalage angulaire entre la position magnétique du rotor et celle du champ tournant et que, au-delà d'une certaine valeur θd, le rotor décroche.

A titre d'exemple également, la valeur de comparaison de la position angulaire θ peut correspondre à une position angulaire décalée par rapport à la valeur de synchronisme θs, ce décalage angulaire étant propre à provoquer un couple moteur suffisant pour que le rotor entraîne une charge prédéterminée.

A titre d'exemple également, la position angulaire θ peut également être comparée à la valeur de décrochement θd, de manière à vérifier que ce décalage est inférieur à la valeur de décrochement θd, c'est-à-dire à vérifier que le moteur ne décroche pas.

## Revendications

1. Dispositif de commande (20 ; 99) d'un moteur électrique (1). pourvu d'un rotor (6) muni d'un aimant permanent (7) couplé magnétiquement avec au moins des premier, deuxième et troisième enroulements statoriques (2, 3, 4) connectés à des première, deuxième et troisième bornes de connexion (2a, 3a, 4a), ce dispositif comprenant :
- un moyen (5) pour fournir, par des première, deuxième et troisièmes bornes de sortie (5a, 5b, 5c), des premier, deuxième et troisième signaux de commande respectifs (Ua, Ub, Uc) auxdites première, deuxième et troisième bornes de connexion dudit moteur, respectivement, ces signaux étant périodiques à une fréquence de commande (F0); et
- un moyen de détermination pour détecter la position angulaire (θ) du rotor,
ce dispositif étant **caractérisé en ce que** le moyen de détermination (22 ; 100) comprend :
- un moyen de mesure (24 ; 101) agencé pour pouvoir être connecté auxdites première, deuxième et troisième bornes de connexion, de sorte que ce moyen forme avec lesdits premier, deuxième et troisième enroulements statoriques au moins des premier et deuxième circuits oscillants ayant respectivement des premier et deuxième configurations électriques (Y1, Y2) distinctes, de sorte que les premier et deuxième circuits oscillants peuvent fournir respectivement des premier et deuxième signaux de mesure (U1, U2) périodiques à des première et deuxième fréquences respectives (F1, F2) qui sont elles-mêmes des fonctions périodiques de la position angulaire (θ) dudit rotor, à une période correspondant à une rotation complète du rotor divisé par le nombre de pôles dudit aimant permanent; et
- un moyen de calcul (26 ; 104) agencé pour recevoir les premier et deuxième signaux de mesure (U1, U2), calculer ladite position angulaire à partir du couple formé par les première et deuxième fréquences de ces signaux, et fournir cette valeur.

2. Dispositif de commande selon la revendication 1, **caractérisé en ce que** lesdites première et deuxième fréquences (F1, F2) desdits premier et deuxième signaux de mesure (U1, U2) sont sensiblement supérieures à ladite fréquence de commande (F0), et que les amplitudes de ces signaux sont sensiblement inférieures à celles desdits signaux de commande.

3. Dispositif de commande selon la revendication 1, **caractérisé en ce qu'**il comprend en outre au moins des premier, deuxième et troisième moyens de filtrage connectés entre, d'une part lesdites première, deuxième et troisième bornes de sortie (5a, 5b, 5c), respectivement, et d'autre part lesdites première, deuxième et troisième bornes de connexion (2a, 3a, 4a), respectivement, de sorte que les premier et deuxième signaux de mesure (U1, U2) ne perturbent pas le fonctionnement normal du moteur.

4. Dispositif de commande selon la revendication 3, **caractérisé en ce que** chacun desdits moyens de filtrage comprend un filtre coupe-bande.

5. Dispositif de commande selon la revendication 3, **caractérisé en ce que** chacun desdits moyens de filtrage comprend un filtre passe-bas.

6. Dispositif de commande selon la revendication 1, **caractérisé en ce que** le moyen de mesure (24) comprend :
- un circuit de commutation (34) agencé pour recevoir un signal de commande (U3), et réaliser séquentiellement, en réponse à ce signal, les connexions du moyen de mesure auxdites bornes de connexion (2a, 3a, 4a) selon lesdites première et deuxième configurations électriques (Y1, Y2); et
- un circuit d'amplification (35) agencé pour fournir lesdits premier et deuxième signaux de mesure (U1, U2) auxdites première et deuxième fréquences respectives, quand ledit circuit de commutation réalise lesdites première et deuxième configurations électriques, respectivement.

7. Dispositif de commande selon la revendication 6, **caractérisé en ce que** ledit circuit d'amplification (35) comprend un amplificateur opérationnel (36) dont la borne de sortie est destinée à être connectée, par l'intermédiaire d'un premier condensateur (37), à l'une desdites première, deuxième et troisième bornes de connexion (2a, 3a, 4a) et au moyen de calcul (26), la borne d'entrée non-inverseuse ("+") de cet amplificateur étant destinée à être connectée, par l'intermédiaire d'un deuxième condensateur (38), à l'une des deux bornes de connexion restantes, tandis que la borne inverseuse ("-") dudit amplificateur opérationnel (36) est destinée à être connectée, par l'intermédiaire d'un troisième condensateur (40), à l'autre desdites bornes de connexion restantes.

8. Dispositif de commande selon la revendication 7, **caractérisé en ce que** ledit circuit de commutation (34) réalise ladite première configuration (Y1) de sorte que la borne de sortie dudit amplificateur opérationnel (36) est connectée à ladite première borne de connexion (2a) par l'intermédiaire dudit premier condensateur (37), que la borne d'entrée non-inverseuse ("+") de cet amplificateur est connectée à ladite deuxième borne de connexion (3a) par l'intermédiaire dudit deuxième condensateur (38), et que la borne d'entrée inverseuse ("-") de cet amplificateur est connectée à ladite troisième borne de connexion (4a) par l'intermédiaire dudit troisième condensateur (40).

9. Dispositif de commande selon la revendication 7, **caractérisé en ce que** ledit circuit de commutation (34) réalise ladite deuxième configuration (Y2) de sorte que la borne de sortie dudit amplificateur opérationnel (36) est connectée à ladite deuxième borne de connexion (3a) par l'intermédiaire dudit premier condensateur (37), que la borne d'entrée non-inverseuse de cet amplificateur est connectée à ladite première borne de connexion (2a) par l'intermédiaire dudit deuxième condensateur (38), et que la borne d'entrée inverseuse de cet amplificateur est connectée à ladite troisième borne de connexion (4a) par l'intermédiaire dudit troisième condensateur (40).

10. Dispositif de commande selon la revendication 7, **caractérisé en ce que** ledit moyen de calcul (26) comprend :
- un convertisseur fréquence-tension (71) agencé pour recevoir lesdits premier et deuxième signaux de mesure (U1, U2), convertir ces signaux en des première et deuxième tensions électriques (X1, X2) qui représentent respectivement lesdites première et deuxième fréquences (F1, F2), et fournir ces tensions; et
- un circuit de traitement (72) agencé pour : recevoir lesdites première et deuxième tensions électriques (X1, X2); effectuer des opérations permettant de déterminer une valeur unique correspondant au couple formé par lesdites première et deuxième fréquences (F1, F2) contenues respectivement dans lesdites première et deuxième tensions électriques (X1, X2); et fournir cette valeur unique comme étant ladite position angulaire (θ) recherchée.

11. Dispositif de commande selon la revendication 10, **caractérisé en ce que** ledit circuit de traitement (72) est agencé pour fournir ledit signal de commande (U3) audit circuit de commutation (34), de manière à définir un cycle de mesure durant une première phase duquel ledit moyen de mesure (24) a ladite première configuration (Y1), et une deuxième phase duquel ledit moyen de mesure (24) a ladite deuxième configuration (Y2).

12. Dispositif de commande selon la revendication 1, **caractérisé en ce que** ledit moyen de mesure (101) comprend :
- un premier circuit d'amplification (102) comprenant un amplificateur opérationnel (36) dont la borne de sortie est connectée, par l'intermédiaire d'un premier condensateur (37) et d'une première bobine (37a) connectée en parallèle avec ce condensateur, à ladite première borne de connexion (2a) et au moyen de calcul (104), la borne d'entrée non-inverseuse ("+") de cet amplificateur étant connectée, par l'intermédiaire d'un deuxième condensateur (38) et d'une deuxième bobine (38a) connectée en parallèle avec ce condensateur, à ladite deuxième borne de connexion (3a), tandis que la borne inverseuse ("-") dudit amplificateur opérationnel (36) est connectée, par l'intermédiaire d'un troisième condensateur (40) et d'une troisième bobine (40a) connectée en parallèle avec ce condensateur, à ladite troisième borne de connexion (4a); et
- un deuxième circuit d'amplification (103) comprenant un amplificateur opérationnel (36) dont la borne de sortie est connectée, par l'intermédiaire d'un premier condensateur (37) et d'une première bobine connectée en parallèle avec ce condensateur, à ladite deuxième borne de connexion (3a) et au moyen de calcul (104), la borne d'entrée non-inverseuse ("+") de cet amplificateur est connectée, par l'intermédiaire d'un deuxième condensateur (38) et d'une deuxième bobine connectée en parallèle avec ce condensateur, à ladite première borne de connexion (2a), tandis que la borne inverseuse ("-") dudit amplificateur opérationnel (36) est connectée, par l'intermédiaire d'un troisième condensateur (40) et d'une troisième bobine (40a) connectée en parallèle avec ce condensateur, à ladite troisième borne de connexion (4a).

13. Dispositif de commande selon la revendication 12, **caractérisé en ce que** ledit moyen de calcul (104) comprend :
- un premier convertisseur fréquence-tension (105) agencé pour recevoir ledit premier signal de mesure (U1), convertir ce signal en une première tension électrique (X1) représentative de ladite première fréquence (F1), et fournir cette tension;
- un deuxième convertisseur fréquence-tension (106) agencé pour recevoir ledit deuxième signal de mesure (U2), convertir ce signal en une deuxième tension électrique (X2) représentative de ladite deuxième fréquence (F2), et fournir cette tension; et
- un circuit de traitement (107) agencé pour : recevoir, desdits premier et deuxième convertisseurs fréquence-tension (105, 106), lesdites première et deuxième tensions électriques (X1, X2), respectivement; effectuer des opérations permettant de déterminer une valeur unique correspondant au couple formé par lesdites première et deuxième fréquences (F1, F2) contenues respectivement dans lesdites première et deuxième tensions électriques (X1, X2), et fournir cette valeur unique comme étant ladite position angulaire (θ) recherchée.

14. Dispositif de commande selon la revendication 10 ou 13, **caractérisé en ce que** ledit circuit de traitement (72 ; 107) est programmé pour contenir une table de correspondance entre une première pluralité de valeurs de fréquence et une deuxième pluralité de valeurs de position angulaire, lesdites première et deuxième pluralités étant liées entre elles selon l'une desdites fonctions périodiques à ladite période correspondant à une rotation complète du rotor divisée par le nombre de pôles dudit aimant permanent.

15. Dispositif de commande selon la revendication 14, **caractérisé en ce que** lesdites opérations dudit circuit de traitement (72 ; 107) consistent, au cours d'un cycle de mesure, à : déterminer, à partir de ladite table de correspondance, des première et deuxième valeurs de position angulaire (θ2, θ3) correspondant à ladite première fréquence (F1) contenue dans ladite première tension électrique (X1), et des troisième et quatrième valeurs de position angulaire (θ4, θ5) correspondant à ladite deuxième fréquence (F2) contenue dans ladite deuxième tension électrique (X2); déterminer le couple unique formé par l'une desdites première et deuxième valeurs et l'une desdites troisième et quatrième valeurs, de sorte que la différence entre ces deux valeurs est égale au décalage angulaire entre deux enroulements statoriques consécutifs dudit moteur; et fournir celle desdites première et deuxième valeurs de ce couple unique, comme étant ladite valeur unique.

16. Dispositif de commande selon la revendication 15, **caractérisé en ce que** ledit circuit de traitement (72 ; 107) est programmé pour comparer à une valeur de comparaison prédéterminée ladite position angulaire (θ) obtenue au terme desdites opérations, de manière à contrôler l'évolution de la position angulaire dudit rotor au cours du temps.

17. Dispositif de commande selon la revendication 16, **caractérisé en ce que** ladite valeur de comparaison est égale à celle représentant la situation idéale de synchronisme.

18. Dispositif de commande selon la revendication 16, **caractérisé en ce que** ladite valeur de comparaison est égale à celle propre à provoquer un couple-moteur suffisant pour entraîner une charge appliquée au rotor.

19. Dispositif de commande selon la revendication 16, **caractérisé en ce que** ladite valeur de comparaison est celle représentant le décrochement du moteur.

20. Dispositif de commande selon la revendication 15, **caractérisé en ce que** ledit circuit de traitement (72 ; 107) est programmé pour : stocker en tant que première position une position angulaire de référence ou la position angulaire calculée au terme d'un premier cycle de mesure, et en tant que deuxième position la position angulaire calculée au terme du cycle de mesure suivant ou deuxième cycle ; calculer la différence entre ladite deuxième position et ladite première position, cette différence fournissant la valeur du déplacement angulaire du rotor au cours dudit deuxième cycle ; et comparer ce déplacement à une valeur de comparaison prédéterminée, de manière à contrôler l'évolution du nombre de tours effectués par ledit rotor au cours du temps.

21. Dispositif de commande selon la revendication 15, **caractérisé en ce que** ledit circuit de traitement (72 ; 107) est programmé pour : stocker en tant que première position une position angulaire de référence ou la position angulaire calculée au terme d'un premier cycle de mesure, et en tant que deuxième position la position angulaire calculée au terme du cycle de mesure suivant ou deuxième cycle; calculer le rapport de ladite différence entre ladite deuxième position et la première position sur la période du cycle de mesure, ce rapport fournissant la valeur de la vitesse de rotation du rotor au cours dudit deuxième cycle ; et comparer cette vitesse à une valeur de comparaison prédéterminée, de manière à contrôler l'évolution de la vitesse de rotation dudit rotor au cours du temps.

22. Dispositif de commande selon la revendication 21, **caractérisé en ce que** ledit circuit de traitement (72 ; 107) est programmé pour : stocker en tant que première vitesse la vitesse de rotation du rotor calculée au terme dudit deuxième cycle de mesure, et en tant que deuxième vitesse la vitesse calculée au terme du cycle de mesure suivant ou troisième cycle ; calculer le rapport de la différence entre ladite deuxième vitesse et ladite première vitesse sur la période d'un cycle de mesure, ce rapport fournissant la valeur de l'accélération du rotor au cours dudit troisième cycle ; et comparer cette accélération à une valeur de comparaison prédéterminée, de manière à contrôler l'évolution de l'accélération dudit rotor au cours du temps.

23. Dispositif de commande selon la revendication 10 ou 13, **caractérisé en ce que** chaque convertisseur fréquence-tension (71 ; 105, 106) comprend un discriminateur de fréquence.

24. Dispositif de commande selon la revendication 10 ou 13, **caractérisé en ce que** le circuit de traitement (72 ; 107) comprend un microprocesseur à 32 bits.

## Claims

1. Device (20; 99) for controlling an electric motor (1) provided with a rotor (6) fitted with a permanent magnet (7) magnetically coupled to at least first, second and third (2, 3, 4) stator coils connected to first, second and third connection terminals (2a, 3a, 4a), said device including:
- means (5) for providing, via first, second and third output terminals (5a, 5b, 5c), first, second and third respective control signals (Ua, Ub, Uc) to said first, second and third connection terminals of said motor, respectively, said signals being periodic at a control frequency (F0); and
- detecting means for detecting the angular position (θ) of the rotor; said device being **characterized in that** the detecting means (22; 100) include:
- measuring means (24; 101) arranged to be able to be connected to said first, second and third connection terminals, so that these means form with said first, second and third stator coils at least first and second oscillating circuits having respectively first and second distinct electric configurations (Y1, Y2), so that the first and second oscillating circuits can provide respectively first and second periodic measurement signals (U1, U2) at first and second respective frequencies (F1, F2) which are themselves periodic functions of the angular position (θ) of said rotor, at a period corresponding to a complete rotation of the rotor divided by the number of poles of said permanent magnet; and
- calculating means (26; 104) arranged to receive the first and second measurement signals (U1, U2), calculate said angular position from the couple formed by the first and second frequencies of said signals and to provide this value.

2. Control device according to claim 1, **characterized in that** said first and second frequencies (F1, F2) of said first and second measurement signals (U1, U2) are substantially higher than said control frequency (F0), and **in that** the amplitudes of said signals are substantially lower than those of said control signals.

3. Control device according to claim 1, **characterized in that** it further includes at least first, second and third filtering means connected between, on the one hand said first, second and third output terminals (5a, 5b, 5c), respectively, and on the other hand said first, second and third connection terminals (2a, 3a, 4a), respectively, so that the first and second measurement signals (U1, U2) do not disturb the normal operation of the motor.

4. Control device according to claim 3, **characterized in that** each of said filtering means includes a band stop filter.

5. Control device according to claim 3, **characterized in that** each of said filtering means includes a low-pass filter.

6. Control device according to claim 1, **characterized in that** the measuring means (24) include:
- a switching circuit (34) arranged to receive a control signal (U3) and to form sequentially, in response to said signal, the connections of the measuring means to said connection terminals (2a, 3a, 4a) in accordance with said first and second electric configurations (Y1, Y2); and
- an amplification circuit (35) arranged to provide said first and second measurement signals (U1, U2) at said first and second respective frequencies, when said switching circuit forms said first and second electric configurations respectively.

7. Control device according to claim 6, **characterized in that** said amplification circuit (35) includes an operational amplifier (36) whose output terminal is intended to be connected, via a first capacitor (37) to one of said first second and third connection terminals (2a, 3a, 4a) and to the calculating means (26), the non-inverting input (« + ») of said amplifier being intended to be connected, via a second capacitor (38) to one of the two remaining connection terminals, whereas the inverting (« - ») terminal of said operational amplifier (36) is intended to be connected, via a third capacitor (40) to the other of said remaining connection terminals.

8. Control device according to claim 7, **characterized in that** said switching circuit (34) forms said first configuration (Y1) so that the output terminal of said operational amplifier (36) is connected to said first connected terminal (2a) via said first capacitor (37), **in that** the non-inverting (« + ») input terminal of said amplifier is connected to said second connection terminal (3a) via said second capacitor (38) and **in that** the inverting (« - ») input terminal of said amplifier is connected to said third connection terminal (4a) via said third capacitor (40).

9. Control device according to claim 7, **characterized in that** said switching circuit (34) forms said second configuration (Y2) so that the output terminal of said operational amplifier (36) is connected to said second connection terminal (3a) via said first capacitor (37), **in that** the non-inverting input terminal of said amplifier is connected to said first connection terminal (2a) via said second capacitor (38), and **in that** the inverting input terminal of said amplifier is connected to said third connection terminal (4a) via said third capacitor (40).

10. Control device according to claim 7, **characterized in that** said calculating means (26) includes:
- a frequency-voltage converter (71) arranged to receive said first and second measurement signals (U1, U2), to convert these signals into first and second electric voltages (X1, X2) which represent respectively said first and second frequencies (F1, F2), and to provide said voltages; and
- a processing circuit (72) arranged to: receive said first and second electric voltages (X1, X2): to carry out operations allowing a single value corresponding to the couple formed by said first and second frequencies (F1, F2) contained respectively in said first and second electric voltages (X1, X2) to be determined; and to supply this single value as being said desired angular position (θ).

11. Control device according to claim 10, **characterized in that** said processing circuit (72) is arranged to supply said control signal (U3) to said switching circuit (34), so as to define a measurement cycle during a first phase of which said measuring means (24) have said first configuration (Y1) and a second phase of which said measuring means (24) have said second configuration (Y2).

12. Control device according to claim 1, **characterized in that** said measuring means (110) include:
- a first amplification circuit (102) including an operational amplifier (36) whose output terminal is connected, via a first capacitor (37) and a first coil (37a) connected in parallel with said capacitor, to said first connection terminal (2a) and to the calculating means (104), the non-inverting (« + ») input terminal of said amplifier being connected, via a second capacitor (38) and a second coil (38a) connected in parallel with said capacitor, to said second connection terminal (3a), whereas the inverting (« - ») terminal of said operational amplifier (36) is connected, via a third capacitor (40) and a third coil (40a) connected in parallel with said capacitor, to said third connection terminal (4a); and
- a second amplification circuit (103) including an operational amplifier (36) whose output terminal is connected, via a first capacitor (37) and a first coil connected in parallel with said capacitor, to said second connection terminal (3a) and to the calculating means (104), the non-inverting (« + ») input terminal of said amplifier is connected, via a second capacitor (38) and a second coil connected in parallel with said capacitor, to said first connection terminal (2a), whereas the inverting (« - ») terminal of said operational amplifier (36) is connected, via a third capacitor (40) and a third coil (40a) connected in parallel with said capacitor, to said third connection terminal (4a).

13. Control device according to claim 12, **characterized in that** said calculating means (104) include:
- a first frequency-voltage converter (105) arranged to receive said first measurement signal (U1), to convert this signal into a first electric voltage (X1) representative of said first frequency (F1) and to supply said voltage;
- a second frequency-voltage converter (106) arranged to receive said second measurement signal (U2), to convert this signal into a second electric voltage (X2) representative of said second frequency (F2) and to supply said voltage; and
- a processing circuit (107) arranged to: receive from said first and second frequency-voltage converters (105, 106) said first and second electric voltages (X1, X2) respectively; to carry out operations allowing a single value corresponding to the couple formed by said first and second frequencies (F1, F2) contained respectively in said first and second electric voltages (X1, X2) to be determined; and to supply this single value as being said desired angular position (θ).

14. Control device according to claim 10 or 13, **characterized in that** said processing circuit (72; 107) is programmed to contain a correspondence table between a first plurality of frequency values and a second plurality of angular position values, said first and second pluralities being linked to each other in accordance with one of said periodic functions to said period corresponding to a complete rotation of the rotor divided by the number of poles of said permanent magnet.

15. Control device according to claim 14, **characterized in that** said operations of said processing circuit (72; 107) consist, during a measurement cycle, in: determining, from said correspondence table, first and second angular position values (θ2, θ3) corresponding to said first frequency (F1) contained in said first electric voltage (X1), and third and fourth angular position values (θ4, θ5) corresponding to said second frequency (F2) contained in said second electric voltage (X2); determining the single couple formed by one of said first and second values and one of said third and fourth values, so that the difference between these two values is equal to the angular offset between two consecutive stator coils of said motor; and supplying that of said first and second values of this single couple, as being said single value.

16. Control device according to claim 15, **characterized in that** said processing circuit (72; 107) is programmed to compare said angular position (θ) obtained at the end of said operations to a predetermined comparison value, so as to monitor the evolution of said rotor angular position over time.

17. Control device according to claim 16, **characterized in that** said comparison value is equal to that representing the ideal synchronism situation.

18. Control device according to claim 16, **characterized in that** said comparison value is equal to that able to cause a sufficient motor torque to drive a load applied to the rotor.

19. Control device according to claim 16, **characterized in that** said comparison value is that representing the pulling out of synchronism of the motor.

20. Control device according to claim 15, **characterized in that** said processing circuit (72; 107) is programmed to: store as first position a reference angular position or the angular position calculated at the end of a first measurement cycle, and as second position the angular position calculated at the end of the following or second measurement cycle; to calculate the difference between said second position and said first position, this difference supplying the angular displacement value of the rotor during said second cycle, and to compare this displacement to a predetermined comparison value; so as to monitor the evolution of the number of revolutions made by said rotor over time.

21. Control device according to claim 15, **characterized in that** said processing circuit (72; 107) is programmed to: store as first position a reference angular position or the angular position calculated at the end of a first measurement cycle, and as second position the angular position calculated at the end of the following or second measurement cycle; to calculate the ratio of said difference between said second position and the first position over the measurement cycle period, this ratio supplying the value of the rotational speed of the rotor during said second cycle, and to compare this speed to a predetermined comparison value; so as to monitor the evolution of the rotational speed of said rotor over time.

22. Control device according to claim 21, **characterized in that** said processing circuit (72; 107) is programmed to: store as first speed the rotational speed of the rotor calculated at the end of said second measurement cycle, and as second speed the speed calculated at the end of the following measurement cycle or third cycle; calculate the ratio of the difference between said second speed and said first speed over a measurement cycle period, this ratio providing the acceleration value of the rotor during said third cycle; and compare this acceleration to a predetermined comparison value, so as to monitor the evolution of said rotor's acceleration over time.

23. Control device according to claim 10 or 13, **characterized in that** each frequency-voltage converter (71; 105, 106) includes a frequency discriminator.

24. Control device according to claim 10 or 13, **characterized in that** the processing circuit (72; 107) includes a 32 bit microprocessor.

## Patentansprüche

1. Vorrichtung (20; 99) zum Regeln eines Elektromotors (1), der mit einem Rotor (6) mit einem Dauermagnet (7) versehen ist, der magnetisch mit zumindest einer ersten, einer zweiten und einer dritten Statorwicklung (2, 3, 4) gekoppelt ist, die mit einer ersten, zweiten bzw. dritten Anschlussklemme (2a, 3a, 4a) verbunden sind, wobei diese Vorrichtung enthält:
- eine Einrichtung (5), um der ersten, zweiten bzw. dritten Anschlussklemme des Motors über eine erste, zweite bzw. dritte Ausgangsklemme (5a, 5b, 5c) ein erstes, zweites bzw. drittes Steuersignal (Ua, Ub, Uc) zu liefern, wobei diese Signale mit einer Steuerfrequenz (F0) periodisch sind; und
- eine Ermittlungseinrichtung zum Erfassen der Winkelstellung (θ) des Rotors,
wobei diese Vorrichtung **dadurch gekennzeichnet ist, dass** die Ermittlungseinrichtung (22; 100) enthält:
- eine Messeinrichtung (24; 101), die dazu vorgesehen ist, mit der ersten, zweiten und dritten Anschlussklemme verbindbar zu sein, so dass diese Einrichtung mit der ersten, zweiten und dritten Statorwicklung zumindest einen ersten und einen zweiten Schwingkreis bildet, die eine unterschiedliche erste bzw. zweite elektrische Konfiguration (Y1, Y2) aufweisen, so dass der erste und der zweite Schwingkreis ein erstes bzw. zweites Messsignal (U1, U2) liefern können, die mit einer ersten bzw. zweiten Frequenz (F1, F2) periodisch sind, die ihrerseits periodische Funktionen der Winkelstellung (θ) des Rotors bei einer Periode sind, die einer vollen Umdrehung des Rotors geteilt durch die Anzahl von Polen des Dauermagneten entspricht; und
- eine Recheneinrichtung (26; 104), die dazu vorgesehen ist, das erste und zweite Messsignal (U1, U2) zu empfangen, die Winkelstellung ausgehend von dem Paar zu berechnen, das von der ersten und zweiten Frequenz dieser Signale gebildet wird, und diesen Wert bereitzustellen.

2. Regelvorrichtung nach Anspruch 1, **dadurch gekennzeichnet, dass** die erste und zweite Frequenz (F1, F2) des ersten und zweiten Messsignals (U1, U2) im wesentlichen höher als die Steuerfrequenz (F0) ist und dass die Amplituden dieser Signale im wesentlichen niedriger als die der Steuersignale sind.

3. Regelvorrichtung nach Anspruch 1, **dadurch gekennzeichnet, dass** sie ferner zumindest eine erste, zweite bzw. dritte Filtereinrichtung aufweist, die einerseits zwischen der ersten, zweiten bzw. dritten Ausgangsklemme (5a, 5b, 5c) und andererseits zwischen der ersten, zweiten bzw. dritten Anschlussklemme (2a, 3a, 4a) angeschlossen ist, so dass das erste und zweite Messsignal (U1, U2) nicht den Normalbetrieb des Motors beeinträchtigt.

4. Regelvorrichtung nach Anspruch 3, **dadurch gekennzeichnet, dass** jede der Filtereinrichtungen ein Bandsperrfilter enthält.

5. Regelvorrichtung nach Anspruch 3, **dadurch gekennzeichnet, dass** jede der Filtereinrichtungen ein Tiefpassfilter enthält.

6. Regelvorrichtung nach Anspruch 1, **dadurch gekennzeichnet, dass** die Messeinrichtung (24) enthält:
- einen Schaltkreis (34), der dazu vorgesehen ist, ein Steuersignal (U3) zu empfangen und sequentiell in Antwort auf dieses Signal die Verbindungen der Messeinrichtung mit den Anschlussklemmen (2a, 3a, 4a) entsprechend der ersten und zweiten elektrischen Konfiguration (Y1, Y2) zu erstellen; und
- einen Verstärkerkreis (35), der dazu vorgesehen ist, ein erstes bzw. zweites Messsignal (U1, U2) mit der ersten bzw. zweiten Frequenz bereitzustellen, wenn der Schaltkreis die erste bzw. zweite elektrische Konfiguration ausführt.

7. Regelvorrichtung nach Anspruch 6, **dadurch gekennzeichnet, dass** der Verstärkerkreis (35) einen Operationsverstärker (36) aufweist, dessen Ausgangsklemme dazu bestimmt ist, über einen ersten Kondensator (37) mit einer der ersten, zweiten und dritten Anschlussklemme (2a, 3a, 4a) und mit der Recheneinrichtung (26) verbunden zu werden, wobei die nicht invertierende Eingangsklemme ("+") dieses Verstärkers dazu bestimmt ist, über einen zweiten Kondensator (38) mit der einen der beiden verbleibenden Anschlussklemmen verbunden zu werden, während die invertierende Klemme ("-") des Operationsverstärkers (36) dazu bestimmt ist, über einen dritten Kondensator (40) mit der anderen der verbleibenden Anschlussklemmen verbunden zu werden.

8. Regelvorrichtung nach Anspruch 7, **dadurch gekennzeichnet, dass** der Schaltkreis (34) die erste Konfiguration (Y1) ausführt, so dass die Ausgangsklemme des Operationsverstärkers (36) über den ersten Kondensator (37) mit der ersten Anschlussklemme (2a) verbunden ist, dass die nicht invertierende Eingangsklemme ("+") dieses Verstärkers über den zweiten Kondensator (38) mit der zweiten Anschlussklemme (3a) verbunden ist und dass die invertierende Eingangsklemme ("-") dieses Verstärkers über den dritten Kondensator (40) mit der dritten Anschlussklemme (4a) verbunden ist.

9. Regelvorrichtung nach Anspruch 7, **dadurch gekennzeichnet, dass** der Schaltkreis (34) die zweite Konfiguration (Y2) ausführt, so dass die Ausgangsklemme des Operationsverstärkers (36) über den ersten Kondensator (37) mit der zweiten Anschlussklemme (3a) verbunden ist, dass die nicht invertierende Eingangsklemme dieses Verstärkers über den zweiten Kondensator (38) mit der ersten Anschlussklemme (2a) verbunden ist und dass die invertierende Eingangsklemme dieses Verstärkers über den dritten Kondensator (40) mit der dritten Anschlussklemme (4a) verbunden ist.

10. Regelvorrichtung nach Anspruch 7, **dadurch gekennzeichnet, dass** die Recheneinrichtung (26) enthält:
- einen Frequenz-Spannungswandler (71), der dazu vorgesehen ist, das erste und das zweite Messsignal (U1, U2) zu empfangen, diese Signale in eine erste und eine zweite elektrische Spannung (X1, X2) umzuwandeln, die die erste bzw. zweite Frequenz (F1, F2) darstellen, und diese Spannungen bereitzustellen; und
- eine Verarbeitungsschaltung (72), die dazu vorgesehen ist, die erste und zweite elektrische Spannung (X1, X2) aufzunehmen; Operationen durchzuführen, mit denen ein einziger Wert ermittelt werden kann, der dem Paar entspricht, das aus der ersten und der zweiten Frequenz (F1, F2) gebildet ist, die in der ersten bzw. zweiten elektrischen Spannung (X1, X2) enthalten sind; und diesen einzigen Wert als die gesuchte Winkelstellung (θ) bereitzustellen.

11. Regelvorrichtung nach Anspruch 10, **dadurch gekennzeichnet, dass** die Verarbeitungsschaltung (72) dazu vorgesehen ist, dem Schaltkreis (34) das Steuersignal (U3) bereitzustellen, so dass ein Messzyklus bestimmt wird, bei dem während einer ersten Phase die Messeinrichtung (24) die erste Konfiguration (Y1) aufweist und bei dem während einer zweiten Phase die Messeinrichtung (24) die zweite Konfiguration (Y2) aufweist.

12. Regelvorrichtung nach Anspruch 1, **dadurch gekennzeichnet, dass** die Messeinrichtung (101) enthält:
- einen ersten Verstärkerkreis (102) mit einem Operationsverstärker (36), dessen Ausgangsklemme über einen ersten Kondensator (37) und über eine parallel zu diesem Kondensator geschaltete erste Spule (37a) mit der ersten Anschlussklemme (2a) und mit der Recheneinrichtung (104) verbunden ist, wobei die nicht invertierende Eingangsklemme ("+") dieses Verstärkers über einen zweiten Kondensator (38) und über eine parallel zu diesem Kondensator geschaltete zweite Spule (38a) mit der zweiten Anschlussklemme (3a) verbunden ist, während die invertierende Klemme ("-") des Operationsverstärkers (36) über einen dritten Kondensator (40) und über eine parallel zu diesem Kondensator geschaltete dritte Spule (40a) mit der dritten Anschlussklemme (4a) verbunden ist; und
- einen zweiten Verstärkerkreis (103) mit einem Operationsverstärker (36), dessen Ausgangsklemme über einen ersten Kondensator (37) und über eine parallel zu diesem Kondensator geschaltete erste Spule mit der zweiten Anschlussklemme (3a) und mit der Recheneinrichtung (104) verbunden ist, wobei die nicht invertierende Eingangsklemme ("+") dieses Verstärkers über einen zweiten Kondensator (38) und über eine parallel zu diesem Kondensator geschaltete zweite Spule mit der ersten Anschlussklemme (2a) verbunden ist, während die invertierende Klemme ("-") des Operationsverstärkers (36) über einen dritten Kondensator (40) und über eine parallel zu diesem Kondensator geschaltete dritte Spule (40a) mit der dritten Anschlussklemme (4a) verbunden ist.

13. Regelvorrichtung nach Anspruch 12, **dadurch gekennzeichnet, dass** die Recheneinrichtung (104) enthält:
- einen ersten Frequenz-Spannungswandler (105), der dazu vorgesehen ist, das erste Messsignal (U1) zu empfangen, dieses Signal in eine erste elektrische Spannung (X1) umzuwandeln, welche die erste Frequenz (F1) darstellt, und diese Spannung bereitzustellen; und
- einen zweiten Frequenz-Spannungswandler (106), der dazu vorgesehen ist, das zweite Messsignal (U2) zu empfangen, dieses Signal in eine zweite elektrische Spannung (X2) umzuwandeln, welche die zweite Frequenz (F2) darstellt, und diese Spannung bereitzustellen; und
- eine Verarbeitungsschaltung (107), die dazu vorgesehen ist, von dem ersten und dem zweiten Frequenz-Spannungswandler (105, 106) die erste und zweite elektrische Spannung (X1, X2) zu erhalten; Operationen durchzuführen, mit denen ein einziger Wert ermittelt werden kann, der dem Paar entspricht, das aus der ersten und der zweiten Frequenz (F1, F2) gebildet ist, die in der ersten bzw. zweiten elektrischen Spannung (X1, X2) enthalten sind; und diesen einzigen Wert als die gesuchte Winkelstellung (8) bereitzustellen.

14. Regelvorrichtung nach Anspruch 10 oder 13, **dadurch gekennzeichnet, dass** die Verarbeitungsschaltung (72; 107) dazu programmiert ist, eine Verknüpfungstabelle zum Verknüpfen zwischen einer ersten Mehrzahl von Frequenzwerten und einer zweiten Mehrzahl von Winkelstellungswerten zu enthalten, wobei die erste und die zweite Mehrzahl gemäß einer der Funktionen miteinander verbunden sind, die periodisch mit der einer vollen Umdrehung des Rotors geteilt durch die Anzahl von Polen des Dauermagneten entsprechenden Periode sind.

15. Regelvorrichtung nach Anspruch 14, **dadurch gekennzeichnet, dass** die Operationen der Verarbeitungsschaltung (72; 107) im Laufe eines Messzyklus darin bestehen, ausgehend von der Verknüpfungstabelle einen ersten und einen zweiten Winkelstellungswert (θ2, θ3) zu ermitteln, die der ersten Frequenz (F1) entsprechen, die in der ersten elektrischen Spannung (X1) enthalten ist, sowie einen dritten und einen vierten Winkelstellungswert (θ4, θ5), die der zweiten Frequenz (F1) entsprechen, die in der zweiten elektrischen Spannung (X2) enthalten ist; das einzige Paar zu ermitteln, das von einem des ersten und zweiten Werts und von einem des dritten und vierten Werts gebildet wird, so dass die Differenz zwischen diesen beiden Werten gleich dem Winkelversatz zwischen zwei aufeinanderfolgenden Statorwicklungen des Motors ist; und jenen des ersten und zweiten Werts dieses einzigen Paares als den einzigen Wert bereitzustellen.

16. Regelvorrichtung nach Anspruch 15, **dadurch gekennzeichnet, dass** die Verarbeitungsschaltung (72; 107) dazu programmiert ist, die Winkelstellung (θ) mit einem vorbestimmten Vergleichswert zu vergleichen, der mit den genannten Operationen gewonnen wird, so dass der Verlauf der Winkelstellung des Rotors im Laufe der Zeit überprüft wird.

17. Regelvorrichtung nach Anspruch 16, **dadurch gekennzeichnet, dass** der Vergleichswert gleich demjenigen ist, der die ideale Synchronlage darstellt.

18. Regelvorrichtung nach Anspruch 16, **dadurch gekennzeichnet, dass** der Vergleichswert gleich demjenigen ist, der dazu geeignet ist, ein Antriebsmoment hervorzurufen, das ausreicht, eine auf den Rotor aufgebrachte Last anzutreiben.

19. Regelvorrichtung nach Anspruch 16, **dadurch gekennzeichnet, dass** der Vergleichswert derjenige ist, der die Abstufung des Motors darstellt.

20. Regelvorrichtung nach Anspruch 15, **dadurch gekennzeichnet, dass** die Verarbeitungsschaltung (72; 107) dazu programmiert ist, als erste Stellung eine Referenz-Winkelstellung oder die gemäß einem ersten Messzyklus berechnete Winkelstellung abzuspeichern und als zweite Stellung die gemäß einem nachfolgenden bzw. zweiten Messzyklus berechnete Winkelstellung abzuspeichern; die Differenz zwischen der zweiten Stellung und der ersten Stellung zu berechnen, wobei diese Differenz den Wert der Winkelverstellung des Rotors im Laufe des zweiten Zyklus liefert; und diese Verstellung mit einem vorbestimmten Vergleichswert zu vergleichen, so dass der Verlauf der Anzahl an Umdrehungen überprüft wird, die von dem Rotor im Laufe der Zeit ausgeführt werden.

21. Regelvorrichtung nach Anspruch 15, **dadurch gekennzeichnet, dass** die Verarbeitungsschaltung (72; 107) dazu programmiert ist, als erste Stellung eine Referenz-Winkelstellung oder die gemäß einem ersten Messzyklus berechnete Winkelstellung abzuspeichern und als zweite Stellung die gemäß einem nachfolgenden bzw. zweiten Messzyklus berechnete Winkelstellung abzuspeichern; das Verhältnis der Differenz zwischen der zweiten Stellung und der ersten Stellung zur Periode des Messzyklus zu berechnen, wobei dieses Verhältnis den Wert der Drehgeschwindigkeit des Rotors im Laufe des zweiten Zyklus liefert; und diese Geschwindigkeit mit einem vorbestimmten Vergleichswert zu vergleichen, so dass der Verlauf der Drehgeschwindigkeit des Rotors im Laufe der Zeit überprüft wird.

22. Regelvorrichtung nach Anspruch 21, **dadurch gekennzeichnet, dass** die Verarbeitungsschaltung (72; 107) dazu programmiert ist, als erste Geschwindigkeit die gemäß dem zweiten Messzyklus berechnete Drehgeschwindigkeit des Rotors abzuspeichern, und als zweite Geschwindigkeit die gemäß dem nachfolgenden bzw. dritten Messzyklus berechnete Geschwindigkeit abzuspeichern; das Verhältnis der Differenz der zweiten Geschwindigkeit und der ersten Geschwindigkeit zur Periode Messzyklus zu berechnen, wobei dieses Verhältnis den Wert der Beschleunigung des Rotors im Laufe des dritten Zyklus liefert; und diese Beschleunigung mit einem vorbestimmten Vergleichswert zu vergleichen, so dass der Verlauf der Beschleunigung des Rotors im Laufe der Zeit überprüft wird.

23. Regelvorrichtung nach Anspruch 10 oder 13, **dadurch gekennzeichnet, dass** jeder Frequenz-Spannungswandler (71; 105, 106) einen Frequenzdiskriminator aufweist.

24. Regelvorrichtung nach Anspruch 10 oder 13, **dadurch gekennzeichnet, dass** die Verarbeitungsschaltung (72; 107) einen 32-Bit-Mikroprozessor aufweist.
